# EUROPEAN PATENT APPLICATION

(11) **EP 0 902 031 A2**
(43) Date of publication of application: **17.03.1999**
(21) Application number: 98306251.4
(22) Date of filing: 05.08.1998
(51) Int. Cl.: C07F 7/08, C07F 7/12

(54) **Aminosilanes and method of preparation**

(30) Priority: 28.08.1997 US 919543
(71) Applicant: DOW CORNING CORPORATION, Midland Michigan 48686-0994 (US)
(72) Inventor: Cannady, John Patrick, Midland, Michigan 48642 (US); Nguyen, Binh Thanh, Midland, Michigan 48640 (US)
(74) Representative: Hall, Marina

(57) **Abstract**

Disclosed herein are novel aminosilanes and their method of preparation. The method comprises reacting a mixture of a heterocyclic amine compound and a halosilane in the presence of diethylene glycol dibutyl ether at a temperature within a range of 5 to 250°C. The method provides high yield of aminosilanes that are easily recoverable and also provides for high ratios of aminosilane production to diethylene glycol dibutyl ether present.

## Description

The present invention relates to novel aminosilanes and a method of preparation. The method comprises reacting a mixture comprising a heterocyclic amine compound and a halosilane in the presence of diethylene glycol dibutyl ether at a temperature within a range of 5 to 250°C. The method provides a high yield of novel aminosilanes that are easily recoverable and also provides for high ratios of aminosilane production to diethylene glycol dibutyl ether present in the method.

Eaborn, C., Organosilicon Compounds, Butterworths Publications Limited, London, p. 339-43, (1960) discloses the reaction of organosilicon halides with ammonia and primary or secondary amines in solvents to give compounds containing Si-N bonds. Pawlenko, S., Organosilicon Chemistry, Organosilicon Chemistry, Walter de Gruyter, New York, p. 72-73, (1986) teaches using a sodium hydride catalyst for the reaction of primary and secondary amines with organohydrosilanes.

The reaction of organic halides with magnesium metal in the presence of solvents such as dialkyl ethers to form reactive complexes typically referred to as Grignard reagents is well known as discussed in Coates et al., ORGANOMETALLIC COMPOUNDS, Vol. 1, p. 76-103 (1967), Methuen and Co. LTD, London, U.K.; and in Kirk and Othmer, ENCYCLOPEDIA OF CHEMICAL TECHNOLOGY, Vol. 10, p. 721-734 (1966), The Interscience Encyclopedia, Inc., NY, NY. The Grignard reagent structure has not been determined with certainty, however it is generally believed that the Grignard reagent exists as a complex in solution and the solvent can play a critical role in the complex formation and is unpredictable.

The reaction of Grignard reagents with halosilanes is described in Kharash et al., Grignard Reactions of Nonmetallic Substances, Prentice-Hall, Inc. NY, p. 1306-1331, (1954).

Turk et al., Organic Synthesis, Vol. 27, p. 7-8, (1947), teach a process for preparing 1,5-hexadiene by the reaction of allyl chloride in anhydrous ether with magnesium turnings.

Turnbull et al., U.S. Patent 5,358,670, report the formation of alkyl Grignard reagents in diethylene glycol dibutyl ether (DEGDBE).

The present invention provides a novel aminosilane and a method of preparation using a Grignard-type reagent as an intermediate, where the method avoids many of the problems with Grignard type processes by creating a reaction mixture that is flowable and easily stirred. Improving mass transfer and heat transfer in the reaction mixture and providing for improved yield of aminosilane. The method provides for a two-phase system from which the aminosilane can be easily separated in one-step. The amount of ether required in the reaction is reduced and an improved ratio of the desired aminosilane to by-product is produced when compared to known Grignard-type processes for preparing organo-substituted silanes. Unlike many known processes for preparing aminosilanes, the present method avoids the formation of 1 mole of amine hydrogen chloride for each mole of aminosilane resulting from the chlorosilanes' reaction with the amine.

The method comprises reacting a mixture comprising a heterocyclic amine compound described by formula 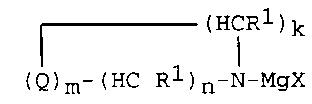 and a halosilane described by formula RₐH_{b}SiX_{4-a-b} in the presence of diethylene glycol dibutyl ether (DEGDBE), where each R is an independently selected hydrocarbon comprising one to about 20 carbon atoms, each R¹ is independently selected from hydrogen atom and hydrocarbons comprising one to 20 carbon atoms, X is a halogen selected from chlorine and bromine, Q is selected from nitrogen and oxygen, m=0 or 1, n=2 to 5, k=0 or 2, k + n + m=4 or 5, a=0 to 3, b=0 to 3 and a + b=0 to 3, at a temperature within a range of 5 to 250°C.

Reacting the mixture comprising the heterocyclic amine compound and the halosilane in the presence of DEGDBE can be conducted in standard reactors suitable for running Grignard reactions. The reactor can be a batch-type, semi-batch type or continuous-type. The preferred reactor is a semi-batch type. The present method is preferably run in an inert environment, therefore, in a preferred method, the reactor is purged and blanketed with an inert gas such as nitrogen or argon.

The heterocyclic amine compound described by formula 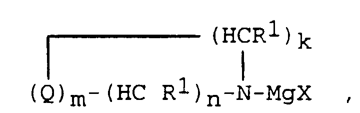 where R¹, Q, X, m, n, k and k + n + m are as previously defined, can be made by standard methods. A Grignard-type reagent described by formula RMgX, where R and X are as previously described can be made and this Grignard-type reagent can then be reacted with a heterocyclic amine described by formula 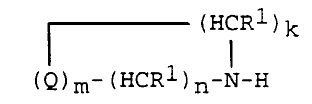 where R¹, Q, n, m, k and k + n + m are as previously described in the presence of a solvent to form the heterocyclic amine compound. R¹ can be a hydrogen atom, an alkyl such as methyl, ethyl, propyl, isopropyl, butyl, sec-butyl, tert-butyl, pentyl, hexyl, heptyl, octyl, nonyl, undecyl and dodecyl; a cycloalkyl such as cyclopropyl, cyclobutyl, cyclopentyl, cyclohexyl, cycloheptyl and cyclooctyl; an alkenyl such as pentenyl, hexenyl, heptenyl, octenyl, vinyl and allyl; a cycloalkenyl such as cyclobutenyl, cyclopentenyl, cyclohexenyl, cycloheptenyl and cyclooctenyl; an aryl such as phenyl, tolyl and naphthyl; and an arylalkyl such as benzyl beta-phenylethyl and gamma-tolylpropyl. Examples of suitable heterocyclic amine intermediates for preparing the heterocyclic amine compound include piperazine, morpholine, pyrrolidine and piperidine.

Solvents useful in the preparation of the heterocyclic amine compound can be ether, tetrahydrofuran and DEGDBE. The preferred solvent is DEGDBE.

Halosilanes useful in the present method are described by formula RₐH_{b}SiX_{4-a-b}, where R, X, a, b and a + b are as previously defined. R can be an alkyl such as methyl, ethyl, propyl, isopropyl, butyl, sec-butyl, tert-butyl, pentyl, hexyl, heptyl, octyl, nonyl, undecyl and dodecyl; a cycloalkyl such as cyclopropyl, cyclobutyl, cyclopentyl, cyclohexyl, cycloheptyl and cyclooctyl; an alkenyl such as pentenyl, hexenyl, heptenyl, octenyl, vinyl and allyl; a cycloalkenyl such as cyclobutenyl, cyclopentenyl, cyclohexenyl, cycloheptenyl and cyclooctenyl; an aryl such as phenyl, tolyl and naphthyl; and an arylalkyl such as benzyl beta-phenylethyl and gamma-tolylpropyl. The preferred halosilane is selected from trichlorosilane, trimethylchlorosilane, dimethylchlorosilane, methyldichlorosilane, dimethyldichlorosilane, methyltrichlorosilane, tetrachlorosilane, dichlorosilane, phenylmethyldichlorosilane, cyclopentyltrichlorosilane, cyclohexenyltrichlorosilane, dicyclopentyldichlorosilane, 5-hexenylmethyldichlorosilane, vinylmethyldichlorosilane, vinyltrichlorosilane, phenyltrichlorosilane and the bromine analogs of such chlorosilanes. The most preferred halosilanes are dimethylchlorosilane, dicyclopentyldichlorosilane, 5-hexenylmethyldichlorosilane, vinylmethyldichlorosilane and phenyltrichlorosilane.

The mole ratio of the heterocyclic amine compound to halosilane present in the present method can be varied within a range of 0.1 to 10. Preferred is when the mole ratio of the heterocyclic amine compound to halosilane is within a range of 0.3 to 3.

0.01 to 10 moles of DEGDBE can be added to the method per mole of heterocyclic amine compound. Preferred is when 0.1 to 5 moles of DEGDBE is added to the method per mole of heterocyclic amine compound. Even more preferred is when 0.5 to two moles of DEGDBE is added to the method per mole of heterocyclic amine compound.

The present method can be run at a temperature within a range of 0 to 250°C. It is preferred that the present method be run at a temperature within a range of 5 to 150°C. Most preferred is a temperature within a range of 35 to 65°C. The pressure at which the present method is run is not critical and can be atmospheric to 1480 kPa. A preferred pressure is within a range of from atmospheric to 963 kPa.

The product of the present method is an animosilane described by formula 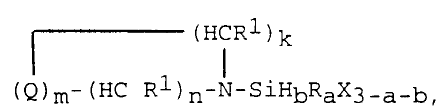 where R, R¹, Q, X, m, n, k, k + n + m, a, b and a + b are as previously defined. Examples of aminosilanes which can be prepared by the present method include, 2-ethylpiperidinotrimethylsilane, 2-ethylpiperidinomethylphenylchlorosilane, 2-ethylpiperidinodimethylhydridosilane, 2-ethylpiperidinodicyclopentylchlorosilane, (2-ethylpiperidino) (5-hexenyl)methylchlorosilane, morpholinovinylmethylchlorosilane and n-methylpiperazinophenyldichlorosilane.

The present method results in a mixture that on standing separates into two-phases, with one phase comprising the aminosilane in DEGDBE and the other phase comprising a magnesium dihalide DEGDBE complex. The phase comprising the aminosilane in DEGDBE is flowable and easily stirred. The aminosilane can be separated from the DEGDBE by distillation. The DEGDBE may be recovered from one or both phases and recycled to the method.

The following examples are provided to illustrate the method. The examples are not intended to limit the scope of the present claims.

### Example 1

Preparation of methylmagnesium chloride in diethylene glycol dibutyl ether (DEGDBE). Magnesium turnings (0.40 mol) and DEGDBE (0.80 mol) were loaded into a flask equipped with a reflux condenser, addition funnel, mechanical stirrer, heating mantle and nitrogen inlet port. The flask was purged with nitrogen and then heated to 60°C. Methylchloride was added to the mixture comprising magnesium turnings and DEGDBE over a 30 minute period with the temperature reaching 143°C. The magnesium was consumed in approximately 2 hours and the system was purged to remove excess methylchloride.

### Example 2

Preparation of 2-ethylpiperidinomagnesium chloride in DEGDBE. The methylmagnesium chloride prepared in Example 1 was cooled to 28°C. and 2-ethylpiperidine (0.44 mol) was added drop-wise over a period of one hour to the flask containing the methylmagnesium chloride and DEGDBE. The resulting mixture was stirred and heated to 60°C. for twenty minutes until the reaction was complete.

### Example 3

Preparation of morpholinomagnesium chloride in DEGDBE. The methylmagnesium chloride prepared in Example 1 was cooled to 40°C. and morpholine (0.44 mol) was added drop-wise over a 90 minute period to a flask containing the methylmagnesium chloride and DEGDBE. Approximately halfway through the morpholine addition, a white solid formed on the flask wall and the mixture thickened. The mixture was heated to 75°C. and the stirring speed increased to break-up the solid over a 90 minute period.

### Example 4

Preparation of l-methylpiperazinomagnesium chloride in DEGDBE. The methylmagnesium chloride prepared in Example 1 was cooled to 25°C and 1-methylpiperazine (0.44 mol) was added drop-wise over 1.5 hour period to the flask containing the methylmagnesium chloride and DEGDBE. Approximately halfway through the addition, the temperature exothermed to 53°C., a white solid formed on the flask wall and the mixture thickened. The stirring rate was increased to break-up the white solid.

### Example 5

Preparation of 2-ethylpiperidinotrimethylsilane in DEGDBE. The 2-ethylpiperidinomagnesium chloride prepared in Example 2 was cooled to 35°C. and trimethylchlorosilane (0.38 mol) was added to a flask containing the 2-ethylpiperidinomagnesium chloride (0.40 mol) and DEGDBE (0.80 mol). The resulting mixture was stirred and heated to 70°C. and remained at this temperature until the reaction was complete. The mixture separated into a clear amber liquid top phase and a dark brown liquid chelate bottom phase. The two phases were analyzed using gas chromatographic and mass spectrometric analysis (GC/MS) to determine the % heterocyclic amine intermediate conversion, % chlorosilane conversion, % aminosilane yield and % magnesium chloride. The results are based on weight percent and presented in Table 1.

### Example 6

Preparation of 2-ethylpiperidinomethylphenylchlorosilane in DEGDBE. The 2-ethylpiperidinomagnesium chloride prepared in Example 2 was cooled to 40°C. and phenylmethyldichlorosilane (0.38 mol) was added drop-wise to a flask containing 2-ethylpiperidinomagnesium chloride (0.40 mol) and DEGDBE (0.80 mol). The mixture was stirred and heated to 70°C. and remained at this temperature until the reaction was complete. The mixture separated into a clear amber liquid top phase and a brown liquid magnesium chloride bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

### Example 7

Preparation of 2-ethylpiperidinodimethylhydridosilane in DEGDBE. The 2-ethylpiperidinomagnesium chloride prepared in Example 2 was cooled to 40°C. and dimethylhydridochlorosilane (0.38 mol) was added drop-wise to a flask containing the 2-ethylpiperidinomagnesium chloride (0.40 mol) and DEGDBE (0.80 mol). The mixture was heated to 55°C. and remained at this temperature until the reaction was complete. The mixture separated into a amber top phase and a brown bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

### Example 8

Preparation of 2-ethylpiperidinodicyclopentylchlorosilane in DEGDBE. The 2-ethylpiperidinomagnesium chloride prepared in Example 2 was cooled to 45°C. and dicyclopentyldichlorosilane was added drop-wise to a flask containing the 2-ethylpiperidinomagnesium chloride (0.40 mol) and DEGDBE (0.80 mol). The mixture was stirred and heated to 55°C. and remained at this temperature until the reaction was complete. The mixture separated into an amber top phase and a brown bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

### Example 9

Preparation of (2-ethylpiperidino) (5-hexenyl)methylchlorosilane in DEGDBE. The 2-ethylpiperidinomagnesium chloride prepared in Example 2 was cooled to 60°C. and 5-hexenylmethyldichlorosilane (0.38 mol) was added over a 20 minute time period to a flask containing 2-ethylpiperidinomagnesium chloride (0.40 mol). The mixture reached 99°C. and separated into a light yellow top phase and a dark brown bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

### Example 10

Preparation of morpholinovinylmethylchlorosilane in DEGDBE. The methylmagnesium chloride prepared in Example 1 was cooled to 40°C. and morpholine (0.44 mol) was added drop-wise over a 90 minute time period to a flask containing the methylmagnesium chloride and DEGDBE. A white solid formed on the flask wall and the mixture thickened. The stirring speed was increased and the mixture was heated to 75°C. Vinylmethyldichlorosilane (0.38 mol) was added through an addition funnel to the mixture. The mixture separated into an amber top phase and a brown bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

### Example 11

Preparation of n-methylpiperazinophenyldichlorosilane in DEGDBE. The methylmagnesium chloride prepared in Example 1 was cooled to 54°C. and 1-methylpiperazine (0.44 mol) was added drop-wise over 1.5 hour period to a flask containing methylmagnesium chloride and DEGDBE. A solid formed and the stirring speed was increased to break up the solid. Phenyltrichlorosilane (0.38 mol) was added through an addition funnel to the mixture. The temperature reached 110°C. and the mixture separated into a clear top phase and brown bottom phase. The two phases were analyzed by GC/MS to determine the % heterocyclic amine intermediate conversion, % chlorosilane conversion, % aminosilane yield and % magnesium chloride. The results are based on weight percent and presented in Table 1.

**TABLE 1**

| Example No. | wt % Heterocyclic Amine Intermediate Conversion | wt % chlorosilane Conversion | wt % Aminosilane Yield | wt % MgCl₂ |
|---|---|---|---|---|
| 5 | 94 | 99.7 | 56.7 | 30 |
| 6 | 95.1 | 98.7 | 44.5 | 28 |
| 7 | 96.4 | 99.8 | 72 | 28 |
| 8 | 87.2 | 90.4 | 15.7 | 19.5 |
| 9 | 100 | 100 | 36.7 | 28.2 |
| 10 | 99.7 | 99.5 | 24.1 | 28.3 |
| 11 | 100 | 100 | 18.7 | 27.5 |

## Claims

1. A method for preparing aminosilanes comprising reacting a mixture of heterocyclic amine compound described by formula 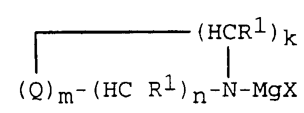 and a halosilane described by formula RₐH_{b}SiX_{4-a-b,} in the presence of diethylene glycol dibutyl ether, where each R is an independently selected hydrocarbon comprising one to 20 carbon atoms, each R¹ is independently selected from a hydrogen atom or hydrocarbons comprising one to 20 carbon atoms, X is a halogen atom selected from chlorine or bromine, Q is selected from nitrogen or oxygen, m=0 or 1, n=2 to 5, k=0 or 2, k + n + m=4 or 5, a=0 to 3, b=0 to 3 and a + b=0 to 3, at a temperature within a range of 5 to 250°C.

2. A method according to claim 1, where the heterocyclic amine compound is selected from a piperazinyl radical, a morpholino radical and a piperidino radical.

3. A method according to claim 1 or claim 2, where the halosilane is selected from trimethylchlorosilane, phenylmethyldichlorosilane, dimethylchlorosilane, dicyclopentyldichlorosilane, 5-hexenylmethyldichlorosilane and vinylmethyldichlorosilane.

4. A method according to any of claims 1 to 3, where the mixture comprises a mole ratio of the heterocyclic amine compound to the halosilane within a range of 0.1 to 10.

5. A method according to any of claims 1 to 4, where the mixture comprises 0.01 to 10 moles of diethylene glycol dibutyl ether per mole of heterocyclic amine compound.

6. An aminosilane obtainable by the methods of claim 1 having the formula 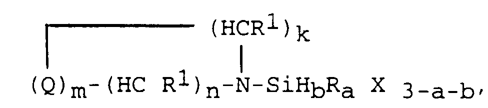 where each R is an independently selected hydrocarbon comprising one to 20 carbon atoms, each R¹ is independently selected from hydrogen atom or hydrocarbons comprising one to 20 carbon atoms, X is a halogen atom selected from chlorine or bromine, Q is selected from nitrogen or oxygen, m=0 or 1, n=2 to 5, k=0 to 2, k + n + m=4 or 5, a=0 to 3, b=0 to 3 and a + b=0 to 3.

7. An aminosilane according to claim 6 where the aminosilane is selected from 2-ethylpiperidinotrimethylsilane, 2-ethylpiperidinomethylphenylchlorosilane, 2-ethylpiperidinodimethylhydridosilane, 2-ethylpiperidinodicyclopentylchlorosilane, (2-ethylpiperidino) (5-hexenyl)methylchlorosilane, morpholinovinylmethylchlorosilane and n-methylpiperazinophenyldichlorosilane.
